# EUROPEAN PATENT SPECIFICATION

(11) **EP 2 112 403 B1**
(45) Date of publication and mention of the grant of the patent: **23.12.2009**
(21) Application number: 08425274.1
(22) Date of filing: 22.04.2008
(51) Int. Cl.: F16H 33/20

(54) **Mechanical torque converter**
Mechanischer Drehmomentwandler
Convertisseur de couple mécanique

(43) Date of publication of application: 28.10.2009
(73) Proprietor: Gamba, Vittorio, 48993 Algorta Vizcaya (ES)
(72) Inventor: Gamba, Vittorio, 48993 Algorta Vizcaya (ES)
(74) Representative: Faggioni, Carlo Maria

(56) References cited:
- US-A- 3 363 483
- US-A- 5 042 313

## Description

The present invention refers to a torque converter of a mechanical type.

A torque converter is disclosed for example in EP 1798446. Such document provides a torque transmission device with a hub arranged in the motion transmission of a vehicle for the transmission of a torque between a control unit and a transmission. In particular, said hub is a turbine hub of a rotor of a torque converter which is coupled with an attenuation hub, with the arrangement of a torque attenuator through a disc of engagement, in particular with a converter bridge coupling. The torque attenuator is manufactured with a beating device which becomes active as soon as a maximum load of the torque attenuator is exceeded.

UK 2 411 932 discloses a mechanical torque converter which transmits a torque by the inertia of flywheels oscillating about a main axis, using gears for causing parallel, equidistant and symmetrical crankshafts to rotate, crank lever arms of which are also equal and arranged symmetrically to the direction of rotation and connected to said flywheels by eccentric pins and by a structure to hold them together for a regular and continuous directional exit.

US - 3 363 483 refers to a non-slip automatic infinitely variable mechanical power transmission mechanism comprising a main carrier connected to a power input shaft for balanced rotation therewith, a gang of main planet wheels rotable on axes on a common pitch circle in the main carrier and rotatable with the main carrier, an output shaft arranged axially with the main carrier, a sun wheel fixed on the output shaft and engaging the main planet wheels, a connector unit comprising a sub-carrier operatively connected co-axially to each main planet wheel, a gang of out-of-balance weight units mounted on each sub-carrier, control means to move the out-of-balance weight units angularly relative to the axes of the respective main planet wheels to establish a neutral position or to positions where on rotation of the main carrier centrifugal force developed through the out-of-balance weight units creates a forward drive of the output shaft according to the angular setting position of the out-of-balance weight units.

US- 5 042 313 refers to a transmission device for converting rotary motion into a linear force by varying the centres about which weights rotate, comprising two impellers which rotates in opposite directions.

The construction of the above-described torque converters is extremely complex and consequently implies high manufacturing costs.

The described drawbacks and others are brilliantly solved by the present invention, which refers to a mechanical torque converter, comprising an input shaft which drives into rotation a casing and an output shaft, on said output shaft there are keyed two eccentrics whereon double crank lever arms are mounted idle, connected - at one end and through small connecting rods - to the wall and to the casing, respectively, and at the other end to the first double crank lever arm, through a small connecting rod to a wheel, mounted idle on the output shaft and the second double crank lever arm is connected, through a small connecting rod, to a gear, mounted idle on the output shaft, and in that the said wheel carries, pivoted idle, about its periphery, mass circular sectors, each having a gear on its own integral oscillation centre apt to mesh with the said toothed wheel.

The present invention will now be described in greater detail, with reference to the accompanying drawings, wherein:
fig. 1 is a cross-section view of a converter according to the present invention;
fig. 2 is a side section view of a converter according to fig. 1, in the direction of arrow A, which shows schematically the positions which may be taken up by each circular sector belonging to the converter;

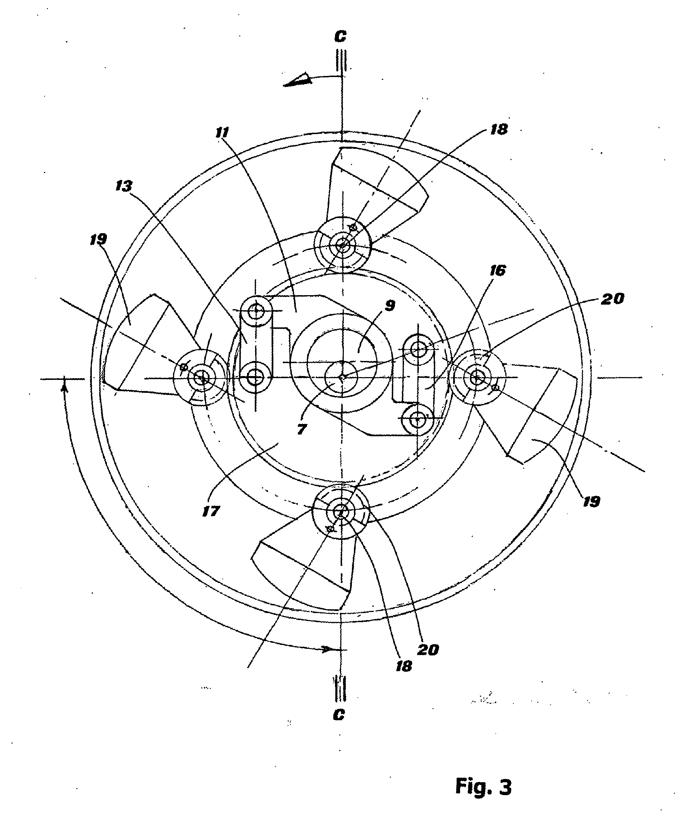

fig. 3 is a view similar to fig. 2, again in the direction of arrow A and showing other details;

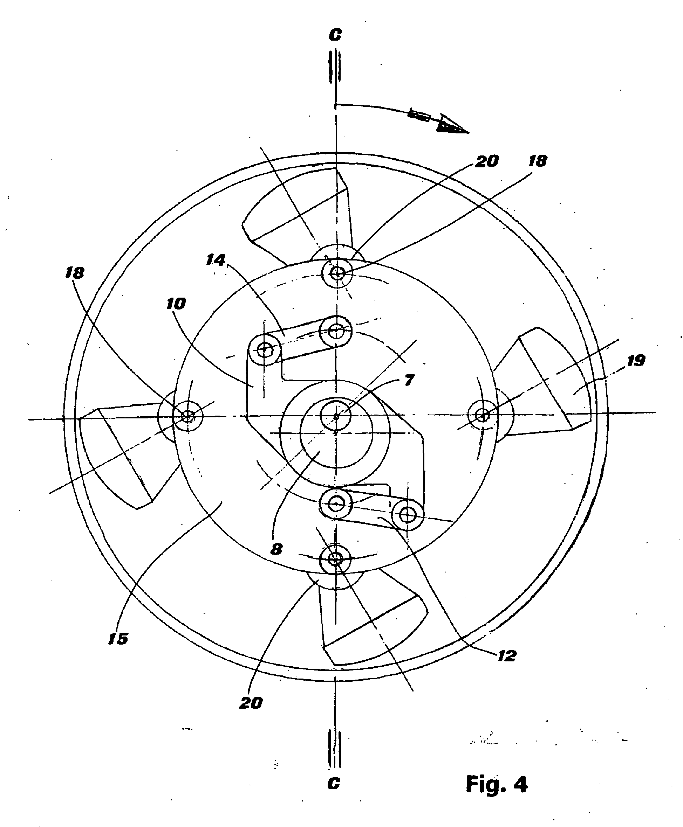

fig. 4 is a view similar to fig. 3, seen in the direction of arrow B of fig. 1; and
fig. 5 is a diagram showing the trend of torque conversion.

According to the present invention, to a drive shaft (or input shaft) 1 there is fixed a casing 2 of a torque converter, divided into two compartments 4, 5 by a preferably disc-like wall 3, which is integral with casing 2. Since compartments 4 and 5 are identical, only compartment 4 will be described.

Through bearings 6, housed in casing 2, an output shaft 7 rests on the same casing 2 free to rotate.

On output shaft 7 two eccentrics 8, 9 are keyed. On eccentrics 8, 9 double crank lever arms 10, 11 are mounted idle, which at one end are connected - through small connecting rods 12, 13 - to wall 3 and to casing 2, respectively. At the other end, double crank lever arm 10 is connected - through a small connecting rod 14 - to a wheel 15 mounted idle on output shaft 7, and the double crank lever arm 11 is connected - through small connecting rod 16 - to a gear 17 mounted idle on output shaft 7.

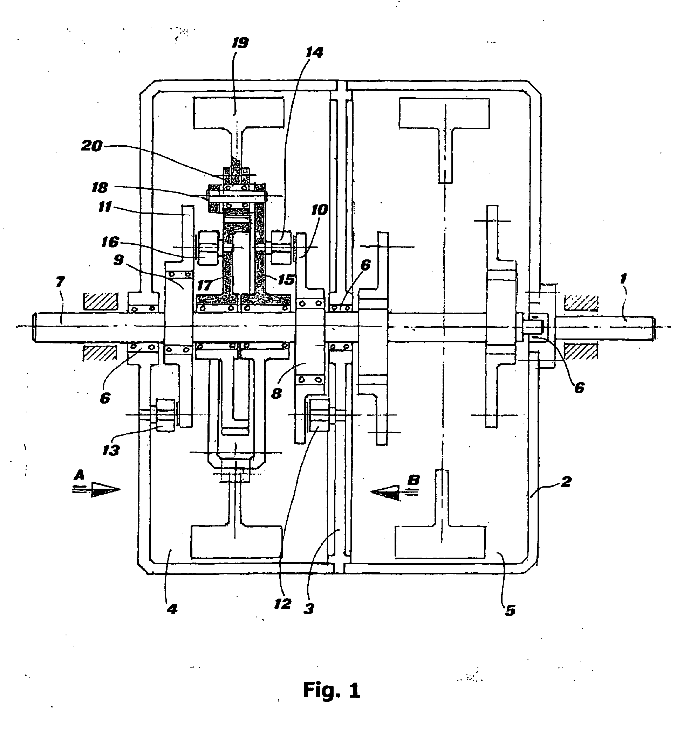

At the periphery of wheel 15 mutually equidistant pins 18 are mounted. On each of pins 18 a circular sector 19 is mounted idle, at the base whereof a gear 20 is coupled, which meshes with wheel 17(see Fig. 1);

The present invention is based on the observation that, by attributing a periodic rotary motion of a harmonic type (in the period of which a first acceleration phase is followed by a second deceleration phase) to circular sectors 19 (where the mass consists of the peripheral crown thereof), see fig. 1, which are pivoted idle and oscillating about pins 18 arranged equidistantly on the periphery of wheel 15 mounted idle on output shaft 7, through means which receive their rotary motion from two double crank lever arms 10, 11, mounted idle on a pair of eccentrics 8, 9, which are equal to and integral with output shaft 7 and said arms 10, 11 being moved by input shaft 1, reactions which generate a torque on output shaft 7 are generated in correspondence of said eccentrics 8, 9.

Said means, driven by double crank lever arms 10, 11, consist of two wheels (see fig. 1) mounted idle on output shaft 7: a first wheel 15 with a peripherally-mounted series of pins 18 whereon circular sectors 19 are keyed idle, oscillating due to a gear 20 integral with each thereof, and a second wheel 17, consisting of a gear which meshes with this last gear 20 (of each of the mass circular sectors 19).

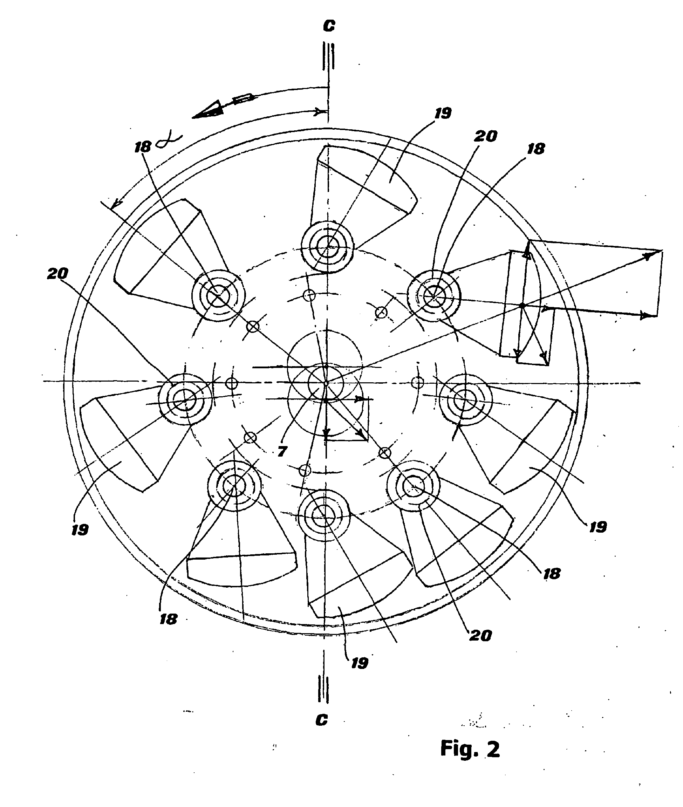

Both wheels 15, 17, each driven by its own crank lever arm 10, 11 (mounted idle on the corresponding eccentric) acquire an identical periodic rotary motion, of a harmonic type, with identical acceleration and deceleration phases (their eccentrics are aligned on the same axis C-C together with that of the output shaft (see fig. 2)).

However, the motion of the second gear wheel 17 is angularly shifted (in advance) by 90° with respect to the motion of first wheel 15, thereby generating a relative motion between the two wheels.

This relative motion in turn generates (thanks to the cited gears of the wheels 20 and 17 thereof) a periodic oscillating motion, of a harmonic type, of mass circular sectors 19: the sum of these two motions (that of oscillating circular sectors 19 and that of wheel 15 driving said sectors) causes the final motion resulting from the mass referred to the centre of rotation of output shaft 7 to become a periodic rotary motion, of a harmonic type, where, however, the acceleration and deceleration phases thereof are shifted (+45°) with respect to those of the wheel thereof which drives them (see α in fig. 2).

This out-of-phase condition implies of course that also the forces acting on eccentrics 8, 9 for the above-said acceleration and deceleration phases of the final motion of mass sectors 19 are in a shifted position with respect to axis C-C as is the tangential component of the resultant thereof which, finally, generates a torque on output shaft 7(see Fig. 2).

This torque, generated on output shaft 7, will have an intensity which varies in a way directly proportional to the period frequency of the final motion of the mass circular sectors 19 and in a way inversely proportional to the speed of output shaft 7.

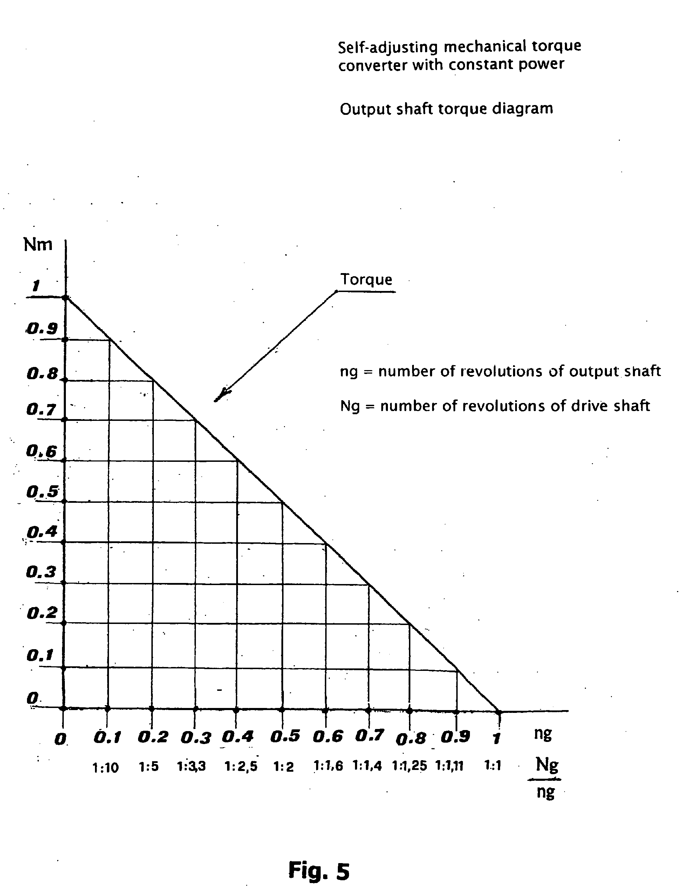

Summarising and considering constant the number of revolutions of engine shaft 1 (constant power), a maximum torque will be obtained on output shaft 7 when the number of revolutions of said last shaft is equal to zero, and zero torque when the number of revolutions of output shaft 7 is equal to that of input (engine) shaft 1, see fig. 5.

Starting from these observations, a mechanical-type torque converter has been devised which, as seen before, comprises:
- an input shaft 1 whereto a torque is applied;
- means actuated by input (engine) shaft 1, capable of imparting to mass circular sectors 19 a periodic rotary motion of a harmonic type (with acceleration and deceleration phases) and, in turn, transmitting the reactions resulting from said motion;
- and an output shaft 7, whereon said means generate a torque, the intensity of which varies in a directly proportional way to the period frequency of the mass motion (of circular sectors 19) and in a way inversely proportional to the rotation speed of said output shaft 7.

In particular, a converter may be provided, wherein:
- two double crank lever arms 10, 11, mounted idle on two eccentrics 8, 9 equal to and integral with output shaft 7 (in a symmetrical position, at 180° to each other), receive a rotary motion from engine shaft 1 by means of two small connecting arms 12, 13, each pivoted - in a 90° out-of-phase position - about converter casing 2.
- two wheels 15, 17 keyed idle, as a pair, on output shaft 7, receive a same motion from the respective crank lever arms 10, 11 thereof: first wheel 15 is the one which carries, pivoted idle, about the periphery thereof, mass circular sectors 19, each having a gear 20 on its own integral oscillation centre; second wheel 17 is a gear which meshes with gears 20 of mass circular sectors 19 and is driven - out of phase by 90° - in advance with respect to the first wheel 15;
- four or more mass circular sectors 19, oscillating idle on pins 18, equidistantly fastened on the periphery of the first wheel 15: these circular sectors 19 - with the peripheral crown thereof - represent the converter mass, and gear 20 is mounted integral with the oscillation centre thereof.

These described converter components cause the relative motion which arises between the two above-described wheels 15, 17 to be the one which generates the oscillatory motion of mass circular sectors 19, a harmonic-type periodic motion which - added to the harmonic rotary motion of pin 18 which drives them - causes the mass of circular sectors 19 to acquire a harmonic, periodic, rotary final motion, having the same centre of rotation of output shaft 7 and with shifted acceleration and deceleration phases (+45°) delayed with respect to those of the harmonic motion of wheel 15 which drives them.

As a consequence of this out-of-phase condition, the tangential component (see drawing in fig. 2) of the resultant of the acceleration and deceleration forces thereof, developing on the two eccentric 8, 9 involved, generates a torque on output shaft 7.

This torque is capable of balancing a torque which may be applied to the output mechanism when an input engine torque is applied thereto.

Such torque will have an intensity which varies in a way inversely proportional to the rotary motion period of the mass involved and to the rotation speed of the output shaft.

The mechanism is therefore capable of accomplishing a mechanical torque converter which advantageously replaces the current transmissions, allowing continuous speed variation in relation to the moment of resistance whereto the output torque of the converter instantly adjusts itself, thereby defining itself as "self-adjusting".

It is of course easy to guess that, with a simple mechanism such as the one just described and illustrated, the rotation of the output shaft would occur with a motion following a law similar to the sinusoidal law. It is hence evident that, in practice, a minimum number (two) of the described assemblies will have to be provided. Thereby it will be possible to attribute to the output shaft motion a law which is acceptable in practice.

## Claims

1. Mechanical-type torque converter, comprising an input shaft (1) which drives into rotation a casing (2) and an output shaft (7), two eccentrics (8, 9) keyed on said output shaft (7), on which eccentrics idle double crank lever arms (10, 11) are mounted, the first double crank lever arm (10) is connected on one side through a small connecting rod (14) to a wheel (15), mounted idle on a shaft (7), and the second double crank lever arm (11) is connected on one side through a small connecting rod (16) to a toothed wheel (17), mounted idle on the shaft (7), said wheel (15) carries, pivoted idle, about its perifery, mass circular sectors (19), each having a gear (20) on its own integral oscillation centre apt to mesh with the said toothed wheel (17) **characterized in that** the double crank lever arms (10, 11) are connected on the other side and by means of small connecting rods (12, 13)- to the wall (3) and to the casing (2), respectively and the wheels (15, 17) are mounted idle on the output shaft (7).

2. Converter as claimed in claaim 1, **characterised in that** said casing (2) is divided into two compartments (4, 5), by a wall (3) which is integral with the casing (2).

3. Converter as claimed in claim 2, **characterised in that** said wall (3) is disc-shaped.

4. Converter as claimed in any previous claim, **characterised in that** said output shaft (7) rests on the casing (2) through bearings (6) housed in the casing (2).

5. Converter as claimed in any previous claim, **characterised in that** a harmonic-type periodic motion is attributed to said circular sectors (19).

6. Converter as claimed in claim 5, **characterised in that** the toothed wheel (17) and the wheel (15) are set so as to have a motion shifted by 90° each other, in order to generate a relative motion between them.

7. Converter as claimed in any previous claim, **characterised in that** the two double crank lever arms (10, 11), mounted idle on the two eccentrics (8, 9) in a symmetrical position, which are equal and integral with the output shaft (7), receive a rotary motion from the drive shaft (1) by means of two small connecting rods (12, 13), each one being pivoted in an out-of-phase position about the converter casing (2).

8. Converter as claimed in claim 7, **characterised in that** the two wheels (15, 17) receive a same motion from the respective crank lever arms (10, 11) thereof.

9. Converter as claimed in any previous claim, **characterised in that** the contents of the second compartment (5) of the casing (2) are identical to those of the first one (4).

## Patentansprüche

1. Drehmomentkonverter von mechanischem Typ, mit einer Eingangswelle (1), die ein Gehäuse (2) in Drehung versetzt, und mit einer Ausgangswelle (7), zwei exzentrischen Elementen (8, 9), die auf die genannte Ausgangswelle (7) aufgekeilt sind, wobei auf diesen exzentrischen Elementen freilaufende, doppelt abgekröpfte Hebelarme (10, 11) gehalten sind, wobei der erste doppelt abgekröpfte Hebelarm (10) auf einer Seite durch eine kleine Verbindungsstange (14) mit einem Rad (15) verbunden ist, das freilaufend auf einer Welle (7) gehalten ist, und der zweite doppelt abgekröpfte Hebelarm (11) auf einer Seite durch eine kleine Verbindungsstange (16) mit einem Zahnrad (17) verbunden ist, das freilaufend auf der Welle (7) gehalten ist, wobei das genannte Rad (15) entlang seines Umfangs frei verschwenkbar gehaltene zirkuläre Massensektoren (19) trägt, die jeweils mit einem Zahnrad (20) auf ihrem eigenen integralen Schwingungszentrum versehen sind, das in der Lage ist, mit dem genannten Zahnrad (17) in Eingriff zu treten, **dadurch gekennzeichnet, dass** die doppelt abgekröpften Hebelarme (10, 11) auf der anderen Seite und mit Hilfe von kleinen Verbindungsstangen (12, 13) mit der Wand (3) und mit dem Gehäuse (2) verbunden sind, und die Räder (15, 17) freilaufend auf der Ausgangswelle (7) gehalten sind.

2. Wandler nach Anspruch 1, **dadurch gekennzeichnet, dass** das genannte Gehäuse (2) durch eine Wand (3), die integral mit dem Gehäuse (2) ausgebildet ist, in zwei Abteilungen (4, 5) unterteilt ist.

3. Wandler nach Anspruch 2, **dadurch gekennzeichnet, dass** die genannte Wand (3) scheibenförmig ist.

4. Wandler nach einem der vorangehenden Ansprüche, **dadurch gekennzeichnet, dass** die genannte Ausgangswelle (7) über Lager (6), die in dem Gehäuse (2) aufgenommen sind, auf dem Gehäuse (2) ruht.

5. Wandler nach einem der vorangehenden Ansprüche, **dadurch gekennzeichnet, dass** den genannten zirkulären Sektoren (19) eine periodische Bewegung vom harmonischen Typ mitgeteilt wird.

6. Wandler nach Anspruch 5, **dadurch gekennzeichnet, dass** das Zahnrad (17) und das Rad (15) so eingestellt sind, dass sie eine Bewegung ausführen, die um 90° gegeneinander versetzt ist, um eine Relativbewegung zwischen diesen zu erzeugen.

7. Wandler nach einem der vorangehenden Ansprüche, **dadurch gekennzeichnet, dass** die beiden doppelt abgekröpften Hebelarme (10, 11), die in einer symmetrischen Position freilaufend auf den beiden exzentrischen Elementen (8, 9) gehalten sind, die gleich und integral mit der Ausgangswelle (7) sind, eine Drehbewegung von der Antriebswelle (1) erhalten, mittels der beiden kleinen Verbindungsstangen (12, 13), wobei jede davon in einer ungleichphasigen Position um das Wandlergehäuse (2) verschwenkt wird.

8. Wandler nach Anspruch 7, **dadurch gekennzeichnet, dass** die beiden Räder (15, 17) eine gleiche Bewegung von den jeweiligen abgekröpften Hebelarmen (10, 12) davon erhalten.

9. Wandler nach einem der vorangehenden Ansprüche, **dadurch gekennzeichnet, dass** der Inhalt der zweiten Abteilung (5) des Gehäuses (2) identisch mit dem der ersten Abteilung (4) ist.

## Revendications

1. Convertisseur de couple de type mécanique, comprenant un arbre d'entrée (1) qui entraîne en rotation un boîtier (2) et un arbre de sortie (7), deux excentriques (8, 9) calés sur ledit arbre de sortie (7), sur lesquels excentriques sont montés des bras de manivelle doubles, libres (10, 11), le premier bras de manivelle double (10) étant relié, sur un côté, via une petite bielle (14) à une roue (15), montée libre sur l'arbre (7), et le deuxième bras de manivelle double (11) étant relié, sur un côté, via une petite bielle (16) à une roue dentée (17), montée libre sur l'arbre (7), ladite roue (15) supportant, pivotant libre, autour de sa périphérie, des secteurs circulaires de masse (19), chacun ayant un engrenage (20) sur son propre centre d'oscillation d'un seul tenant, conçu pour s'engrener avec ladite roue dentée (17), **caractérisé en ce que** les bras de manivelle doubles (10, 11) sont reliés, sur l'autre côté, et au moyen de petites bielles (12, 13) à la paroi (3) et au boîtier (2), respectivement, et les roues (15, 17) sont montées libres sur l'arbre de sortie (7).

2. Convertisseur selon la revendication 1, **caractérisé en ce que** ledit boîtier (2) est divisé en deux compartiments (4, 5) par une paroi (3) qui est d'un seul tenant avec le boîtier (2).

3. Convertisseur selon la revendication 2, **caractérisé en ce que** ladite paroi (3) a la forme d'un disque.

4. Convertisseur selon l'une quelconque des revendications précédentes, **caractérisé en ce que** ledit arbre de sortie (7) repose sur le boîtier (2) via des paliers (6) logés dans le boîtier (2).

5. Convertisseur selon l'une quelconque des revendications précédentes, **caractérisé en ce qu'**un mouvement périodique de type harmonique est attribué auxdits secteurs circulaires (19).

6. Convertisseur selon la revendication 5, **caractérisé en ce que** la roue dentée (17) et la roue (15) sont réglées de manière à avoir un mouvement décalé de 90° l'une de l'autre, afin de produire un mouvement relatif entre elles.

7. Convertisseur selon l'une quelconque des revendications précédentes, **caractérisé en ce que** les deux bras de manivelle doubles (10, 11), montés libres sur les deux excentriques (8, 9) dans une position symétrique, qui sont égaux et d'un seul tenant avec l'arbre de sortie (7), reçoivent un mouvement rotatif de l'arbre menant (1) au moyen de deux petites bielles (12, 13), chacune étant pivotée dans une position déphasée autour du boîtier (2) de convertisseur (2).

8. Convertisseur selon la revendication 7, **caractérisé en ce que** les deux roues (15, 17) reçoivent un même mouvement de leurs bras de manivelle doubles (10, 11) respectifs.

9. Convertisseur selon l'une quelconque des revendications précédentes, **caractérisé en ce que** le contenu du deuxième compartiment (5) du boîtier (2) est identique à celui du premier (4).
